# EUROPÄISCHE PATENTANMELDUNG

(11) **EP 1 332 775 A1**
(43) Veröffentlichungstag der Anmeldung: **06.08.2003**
(21) Anmeldenummer: 02027894.1
(22) Anmeldetag: 13.12.2002
(51) Int. Cl.: A63B 24/00

(54) **Anordnung für das Fitnesstraining**

(30) Priorität: 14.12.2001 DE 20120290 U
(71) Anmelder: EPL Medizintechnische Produktionsgesellschaft mbH, 67722 Winnweiler (DE)
(72) Erfinder: Lautenschläger, Peter, 67724 Gonbach (DE)
(74) Vertreter: Schmitt, Meinrad, Dipl.-Ing.

(57) **Zusammenfassung**

Die Erfindung bezieht sich auf eine Anordnung für das Fitnesstraining, enthaltend einen Rechner (2) sowie wenigstens ein Trainingsgerät (43 bis 48). Die Anordnung soll dahingehend weitergebildet werden, dass eine effektive Nutzung des oder der Trainingsgeräte (43 bis 48) mit geringem Fertigungs- und Installationsaufwand erreicht wird. Hierzu wird vorgeschlagen, dass der Rechner (2) eine Steuerlogik (35), Programmblöcke (21 bis 34) und Module (11 bis 15) enthält, dass ein Datenträger (10) vorgesehen ist, auf welchem personenbezogene Daten sowie Daten gemäß ausgewählter Module (11 bis 15) und Programmblöcke (21 bis 34) speicherbar sind, und dass das wenigstens eine Trainingsgerät (43 bis 48) derart ausgebildet ist, dass eine Steuerung mittels des Datenträgers (10) durchführbar ist.

## Beschreibung

Die Erfindung betrifft eine Anordnung für das Fitnesstraining gemäß der im Oberbegriff des Patentanspruchs 1 angegebenen Merkmale. Ferner bezieht sich die Erfindung auf ein Verfahren zur Steuerung einer derartigen Anordnung.

Aus der EP 0 700 694 A1 ist eine derartige Anordnung sowie ein Verfahren zur Steuerung desselben bekannt. Die Anordnung enthält einen Rechner, wenigstens ein Trainingsgerät, eine als Bildschirm ausgebildete Anzeigeeinheit sowie eine als Tastatur ausgebildete Eingabeeinheit. Ferner ist ein der trainierenden Person zugeordneter Meßwertaufgeber vorgesehen und mit dem Rechner verbunden, wobei mittels einer zusätzlichen Steckkarte des Rechners die erfaßten Daten dem Rechner zwecks Auswertung zugeführt werden und unter Berücksichtigung geeigneter Parameter die Ergebnisse der Auswertung auf dem Bildschirm angezeigt werden. Die zusätzliche Steckkarte ermöglicht zwar den Einsatz eines handelsüblichen Rechners oder Personalcomputers (PC), doch erfordert die Nutzung und Überwachung der Anordnung bzw. des Rechners Spezialkenntnisse und eine intensive personelle Betreuung durch einen Therapeuten oder Trainer, wodurch ein nicht unerheblicher zusätzlicher Aufwand bedingt ist.

Die heutige Situation im Fitness- und/oder Gesundheitsbereich kann wie folgt beschrieben werden:

Der Fitnessbereich wird von Fitness Studios und der Rehabereich von Physiotherapeuten betreut, wobei in den entsprechenden Einrichtungen eine intensive personelle Betreuung notwendig ist. Die trainierenden Personen werden an den jeweiligen Geräten eingewiesen und dahingehend überwacht, dass die Nutzung der Geräte entsprechend der Gesundheitsförderung richtig ist. Somit ist ein entsprechend hoher Personaleinsatz erforderlich. Wird ein spezielles Training, wie z. B. Aufbau Immunsystem, gewünscht, so muss ein solches Programm speziell durch den Therapeuten oder Trainer zusammengestellt werden. Weiterhin werden Lern- und Denktraining oder Spiele- und Quiztraining am Markt nicht angeboten. Auch gibt es Einrichtungen, die mit stark reduziertem Personal arbeiten, in der Regel eine Person am Eingang zur Kontrolle, wodurch ein effektives Training in Frage gestellt ist. Falls die trainierenden Personen die Trainingsgeräte so nutzen, wie sie es für richtig halten, ist ein erfolgreicher Trainingsverlauf nicht gewährleistet und zudem sind Gesundheitsrisiken, beispielsweise aufgrund von Überlastungen des Muskelapparats oder des Kreislaufsystems nicht auszuschließen. Ferner zeigen neueste Erkenntnisse aus Medizin und Wissenschaft, dass beispielsweise ein früher als richtig empfundenes Herzkreislauftraining heute überholt ist, so dass durch hergebrachte Trainingsmethoden unter Umständen mehr Schaden zugefügt als Nutzen erreicht wird. Die trainierenden Personen kennen nicht die neuesten Erkenntnisse aus Forschung und Wissenschaft und trainieren somit nicht gesundheitsfördernd. Sofern die trainierende Person ein unkontrolliertes Training betreibt und sich von der momentanen Verfassung leiten läßt, sind Gesundheitsschäden zu befürchten. Auch kann bei einem unkontrollierten Training das Immunsystem der trainierenden Person geschwächt werden.

Da die Trainingsgeräte von der trainierenden Person und/oder dem Trainer oder Physiotherapeuten ausgewählt werden, besteht ferner das Problem, dass in folge von Fehleinschätzungen, Modetrends usw. vorranging besondere Trainingsgeräte ausgewählt werden, wie beispielsweise Ergometer oder Kraftmaschinen, welche somit stark beansprucht und abgenutzt werden und schon nach kurzer Zeit überholt oder ersetzt werden müssen, während beispielsweise Laufbänder nur wenig genutzt und auch nach relativ langer Zeit quasi neuwertig sind, obgleich beispielsweise mit Laufbändern in vielen Fällen ein effektiver und optimaler Trainingsverlauf erreicht werden kann.

Der Erfindung liegt daher die Aufgabe zugrunde, die aufgezeigten Nachteile zu vermeiden und die Anordnung und ferner das zur Steuerung bzw. Nutzung derselben vorgesehene Verfahren dahingehend weiterzubilden, dass eine effektive Nutzung des oder der Trainingsgeräte mit geringem Fertigungs- und Installationsaufwand erreicht wird. Des weiteren soll eine möglichst gleichmäßige Auslastung und Nutzung und im Ergebnise eine reduzierte Abnutzung der Trainingsgeräte ermöglicht werden. Ferner sollen neue Erkenntnisse aus Medizin und Wissenschaft mit geringem Aufwand problemlos zur Optimierung der Nutzung der Trainingsgeräte und/oder des Trainingsverlaufs jederzeit adaptiert werden können.

Die Lösung dieser Aufgabe erfolgt hinsichtlich der Anordnung gemäß der im Patentanspruch 1 angegebenen Merkmale und hinsichtlich des Verfahrens gemäß der im Patentanspruch 8 angegebenen Merkmale.

Die erfindungsgemäße Anordnung und das erfindungsgemäße Verfahren ermöglichen mit geringem apparativen und/oder personellen Aufwand eine optimierte Durchführung eines Trainings bei effektiver Nutzung der Trainingsgeräte. Die Steuerung der Trainingsgeräte erfolgt durch Vorgabe der jeweiligen Steuerfunktionen in Abhängigkeit der personenenbezogenen Daten der trainierenden Person, und eine Überbeanspruchung sowohl des jeweiligen Trainingsgeräts als auch der trainierenden Person wird vermieden. Unter Berücksichtigung der personenbezogenen Daten, welche mittels eines Datenträgers und/oder mittels einer Eingabeeinheit in den Rechner eingegeben werden, erfolgt durch die trainierende Person die Auswahl des gewünschten Moduls und die entsprechende Zuordnung oder Kombination des oder der Programmblöcke oder diesen entsprechender Daten mittels der Steuereinheit, um die entsprechenden Steuerfunktionen der Module, insbesondere für die Nutzung des ausgewählten und/oder vorgeschlagenen Trainingsgerätes zu realisieren. Der Datenträger ist bevorzugt als SmartCard ausgebildet, doch kann jener im Rahmen der Erfindung auch als Diskette, CD-Rom, Chipcard oder dergleichen ausgebildet sein. In jedem Fall ist der Datenträger derart ausgebildet, dass Daten sowohl eingegeben und gespeichert werden als auch bei Bedarf ausgelesen werden können, und zwar mittels geeigneter Schreib- und Leseeinheiten, welche sowohl dem Rechner als auch dem oder den Trainingsgeräten zugeordnet sind.

Ferner sei darauf hingewiesen, dass das oder die Trainingsgeräte nach den jeweiligen Anforderungen und Bedürfnissen ausgebildet sind und beispielsweise als Cardiogerät, Stepper, Rudergerät, Kraftmaschine, Ergometer, Laufband, Crosstrainer usw. ausgebildet sein können. Zwischen dem oder den Trainingsgeräten und dem Rechner besteht eine Verbindung zur Übermittlung von Daten, zweckmäßig in beiden Richtungen, wobei eine feste Verdrahtung über elektrische Leitungen ebenso vorgesehen sein kann wie eine drahtlose Verbindung, wie beispielsweise über Infrarot-Schnittstellen. Der Rechner enthält geeignete Speichereinheiten, einerseits für auszuwählende Module und andererseits für Programmblöcke sowie eine Steuerlogik oder Steuereinheit zur Verknüpfung der in den Modulen und den Programmblöcken gespeicherten Daten. In bevorzugter Weise enthalten die Module ferner Steuerfunktionen und/oder diesen entsprechenden Daten zur Steuerung des oder der Trainingsgeräte, wobei die Übertragung mittels des Datenträgers erfolgt. Der Datenträger ist ferner zur Speicherung von personenbezogenen Daten, wie Alter, Größe, Gewicht, Geschlecht usw. der trainierenden Person ausgebildet, wobei diese Daten bevorzugt mittels der Eingabeeinheit des Rechners eingegeben und mittels dessen Schreib- und Leseeinheit auf den Datenträger zwecks Speicherung geschrieben werden. Die entsprechend des von der trainierenden Person ausgewählten Moduls aus den Programmblöcken über die Steuereinheit erfaßten und/oder ermittelten Daten werden gleichfalls auf den Datenträger geschrieben. Ferner werden die Daten des ausgewählten jeweiligen Trainingsgerätes sowie die Steuerfunktionen für das Trainingsgerät, wie insbesondere Drehzahl, Belastungsmoment, Trainingsdauer usw. für das oder die Trainingsgeräte auf dem Datenträger gespeichert.

Darüber hinaus wird in zweckmäßiger Weise zu Beginn des Trainings nach Auswahl des Moduls das erste zu benutzende Trainingsgerät, welches als Startgerät bezeichnet wird, auf der Anzeigeeinheit, insbesondere des Rechners angezeigt, damit die trainierende Person unmittelbar mit dem "richtigen" als erstes ausgewähltes Trainingsgerät beginnen kann. Ist das Training auf dem ersten Trainingserät gemäß der Daten des Datenträgers ordnungsgemäß durchgeführt und absolviert, so wird gemäß der auf dem Datenträger gespeicherten Daten des Trainingsverlaufs mittels der Anzeigeeinheit des Startgerätes das nächste Trainingsgerät angezeigt. Mittels des Datenträgers, der in die dem jeweiligen Trainingsgerät zugeordnete Lese- und Schreibeinheit einführbar ist, wird somit die Bedienung des Trainingsgerätes und ferner die Reihenfolge der zu benutzenden Trainingsgeräte vorgegeben. Das auf dem jeweiligen Trainingsgerät absolvierende Training wird gemäß der auf dem Datenträger gespeicherten und mittels der Lese- und Schreibeinheit eingegebenen Steuerfunktionen und/oder für vorgegebene Trainingsdaten überwacht, wobei im Falle des Einhaltens und/oder des Erreichens der Trainingsdaten auf dem Datenträger ein korrespondierendes Signal und/oder eine Speicherung als "absolviert" auf dem Datenträger erfolgt. Ist das Training am ersten Trainingsgerät absolviert oder abgeschlossen, so wird das nächste zu benutzende Trainingsgerät der trainierenden Person auf der Anzeigeeinheit dieses Trainingsgerätes in geeigneter Form ausgegeben, damit die trainierende Person an dem nächsten Trainingsgerät weitertrainiert, wobei die Überwachung und Steuerung analog zu den vorstehenden Ausführungen erfolgt.

Besonderre Ausgestaltungen und Weiterbildungen sind in den Unteransprüchen sowie der weiteren Beschreibung angegeben.

Die Erfindung wird nachfolgend anhand der in der Zeichnung dargestellten Ausführungsbeispiele näher erläutert, ohne dass insoweit eine Beschränkung erfolgt. Es zeigen:
- Fig. 1: ein Prinzipschaltbild der auszuwählenden Module und Programmblöcke, welche über eine Steuereinheit verknüpft sind,
- Fig. 2: ein Ablaufdiagramm der Auswahl eines Moduls,
- Fig. 3: ein Blockschaltbild der Anordnung,
- Fig. 4: eine Prinzipdarstellung der Anordnung.

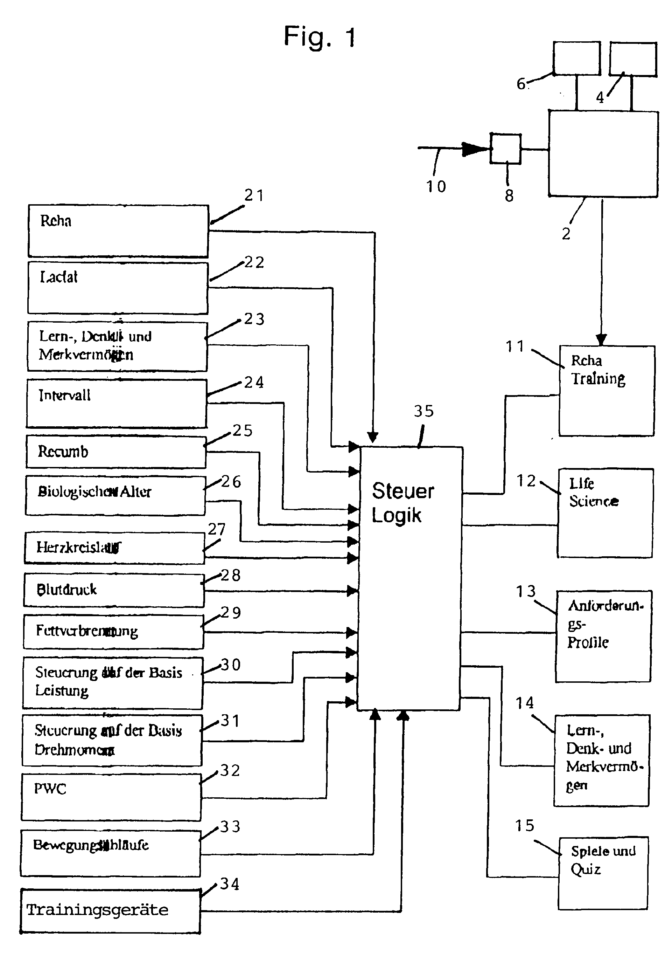

Gemäß Fig. 1 ist ein Rechner 2 vorgesehen, welcher insbesondere als Personalcomputer - nachfolgend auch als PC bezeichnet - ausgebildet ist, und mit welchem eine Eingabeeinheit 4 und eine Anzeigeeinheit 6 verbunden ist. Die Eingabeeinheit 4 ist insbesondere als PC-Tastatur oder als Maus ausgebildet und die Anzeigeeinheit 6 ist insbesondere als ein handelsüblicher Monitor oder als ein TFT-Bildschirm ausgebildet. Mit dem Rechner 2 ist ferner eine Lese- und Schreibeinheit 8 verbunden, welche bevorzugt in den Rechner bzw. dessen Gehäuse integriert sein kann. Die Lese- und Schreibeinheit 8 ermöglicht das Einführen und/oder das Lesen und Schreiben eines durch den Pfeil 10 angedeuteten Datenträgers, welcher insbesondere als SmartCard ausgebildet ist. Der Rechner 2 enthält geeignete Speichereinheiten und/oder Mittel zur Verarbeitung eines Programms für Module 11 bis 15 sowie Programmblöcke 21 bis 33 sowie eine Steuerlogik 35 zur Verknüpfung und/oder Kombination der in den genannten Modulen und Programmblöcken gespeicherten Daten. Die Module und die Programmblöcke sind bevorzugt dahingehend ausgebildet, dass die Daten bei Bedarf geändert und/oder überschrieben werden können. Ferner sei festgehalten, dass die Module 11 bis 15 und die Programmblöcke 21 bis 34 ebenso wie die Steuerlogik 35 Bestandteil eines Datenverarbeitungprogramms sein können.

Das Modul 11 ist für Reha-Training, das Modul 12 für Life Science, das Modul 13 für Anforderungs-Profile, das Modul 14 für Lern-, Denk- und Merkvermögen sowie das Modul 15 für Spiele und Quiz vorgesehen.

Die Module 11 bis 15 enthalten Daten insbesondere folgender Funktionen:

### 11. Life Science:

Aufbau Immunsystem; Aufbau Herzmuskel und Herzvolumen; Aufbau Lungenvolumen; Fettverbrennung; Prophylaxe Cellulitis, Krampfadern und Besenreiser; Ernährung gekoppelt mit Cardio; Muskel- und Gelenktraining; biologischer Alterstest; Aufbau Skelettmuskulatur.

### 12. Anforderungsprofile:

Skifahren; Bergwandern; Tauchen; Surfen; Fahrradtouren und sonstige Tätigkeiten mit spezifischer Anforderung.

### 13. Reha Training:

Vorgaben von Ärzten an Rehapersonen; die den jeweiligen Vorgaben zugeordneten Fachbegriffe sind im PC gespeichert. Aus den Fachbegriffen wählt die Steuerlogik die jeweiligen Programme aus und weist die Geräte an, mit denen trainiert werden soll.

### 14. Lern-, Denk- und Merkvermögen:

Bei entsprechendem Puls/Leistungsverhalten werden Merk- und Denkvermögen gesteigert, da im unteren aeroben Pulsbereich das Gehirn verstärkt mit Sauerstoff versorgt wird.

### 15. Spiele und Quiz:

Über Puls und Leistung werden Spiele gesteuert oder Quiz bzw. Rätsel gelöst. Schwerpunkt ist Gesundheitstraining auf der Basis, Spiel und Spaß zu absolvieren.

Der Programmblock 21 ist für Reha, der Programmblock 22 für Lactat, der Programmblock 23 für Lern-, Denk- und Merkvermögen, der Programmblock 24 für Intervall, der Programmblock 25 für Recumb, der Programmblock 26 für biologisches Alter, der Programmblock 27 für Herz-Kreislauf, der Programmblock 28 für Blutdruck, der Programmblock 29 für Fettverbrennung, der Programmblock 30 für Steuerung auf Basis der Leistung, der Programmblock 31 für Steuerung auf der Basis Drehmoment, der Programmblock 32 für PWC, der Programmblock 33 für Bewegungsabläufe und schließlich der Programmblock 34 für die zu nutzenden Trainingsgeräte vorgesehen. Es ist von besonderer Bedeutung, dass in dem Programmblock 34 die für sämtliche oder einen Teil der zu nutzenden Trainingsgeräte für das Training relevanten Daten und/oder die zur Bedienung und/oder Steuerung der einzelnen Trainingsgeräte erforderlichen Daten bzw. Steuerfunktionen enthalten sind, um beispielsweise Drehzahl, Leistung, Zeitdauer der Nutzung vorzugeben. Ferner enthält der Programmblock 34 bevorzugt Daten zur bisherigen Nutzungsdauer oder Belastung oder Verfügbarkeit oder dergleichen der einzelnen Trainingsgeräte, so dass bedarfsweise anstelle eines primär ausgewählten Trainingsgeräts ein anderes Trainingsgerät für das Training vorgesehen wird. Die Programmblöcke enthalten in geeigneter Form die Daten, welche in Abhängigkeit der auf die jeweils trainierende Personen bezogenen Daten und gemäß der Daten des ausgewählten Moduls für einen Trainingsablauf kombiniert und/oder verknüpft werden, insbesondere zur Steuerung der derart ausgewählten Trainingsgeräte. Es sei festgehalten, dass im Rahmen der Erfindung die Module ebenso wie die Programmblöcke für andere Funktionen bzw. Daten ausgelegt sein können oder das geeignete zusätzliche Module oder Programmblöcke vorgesehen oder integriert werden können.

Die Anordnung, welche auch als SmartCard Fitness bezeichnet wird, revolutioniert den Fitness- und/oder Reha-Markt. Die Anordnung und das Verfahren ermöglichen ferner erfindungsgemäß die Überwachung und Kontrolle der Fitnessgeräte, insbesondere deren Einsatzdauer, Belastung, Verfügbarkeit. Hierzu werden, insbesondere mittels des Datenträgers und nach Beendigung eines Trainings für das jeweilige Trainingsgerät relevante Daten in den Recher 2 eingegeben und von diesem ausgewertet.

Durch die einzelnen Programmblöcke können beispielsweise die fünf Module der trainierenden Person zur Auswahl gegeben werden. Jedes ausgewählte Modul wird automatisch exakt persönlich zugeordnet. Der Trainierende hat somit einen persönlichen Trainer, wodurch größtmögliche Sicherheit für ein gesundes und richtiges Training gewährleistet ist. Die Programmblöcke 21 bis 34 stellen die Basis für den gesamten Ablauf dar. Die Steuerlogik 35 ruft je nach Auswahl der Module 11 bis 15 einen oder mehrere Programmblöcke 31 bis 34 ab, kombiniert diese miteinander, um die entsprechenden Steuerfunktionen der Module zu realisieren.

Die Nutzung der Anordnung bzw. von SmartCard Fitness ist denkbar einfach:
a. Einchecken mit der SmartCard,
b. Modul auswählen,
c. Angewiesenes Trainingsgerät benutzen (Startgerät),
d. Vom Startgerät wird automatisch das nächste Trainingsgerät angewiesen, usw.,
e. Auschecken.

Wird am Trainingsende nicht am PC ausgelesen, sondern direkt ausgecheckt, so werden beim nächsten Training, vor der Auswahl des Moduls, die zuletzt absolvierten Trainingsabläufe gespeichert.

Insbesondere über die Eingabeeinheit 4 des Rechners 2 können von der trainierenden Person die bevorzugt fünf Module ausgewählt werden:
- Modul 11: Life Science
- Modul 12: Anforderungsprofile
- Modul 13: Reha Training
- Modul 14: Lern-, Denk- und Merkvermögen
- Modul 15: Spiele und Quiz

Entsprechend des ausgewählten Moduls erfolgt, bevorzugt unter Berücksichtigung der mittels des Datenträgers bereitgestellten und vom Rechner 2 erfaßten personenbezogenen Daten, die Auswahl und/oder Kombination mit wenigstens einem der Programmblöcke 21 bis 34 über die Steuerlogik 35. Die derart ermittelten und/oder kombinierten Daten einerseits des ausgewählten Moduls 11 bis 15 und andererseits des oder der Programmblöcke 21 bis 34 werden mittels der Lese- und Schreibeinheit 8 auf den Datenträger 10 geschrieben, wobei in zweckmäßiger Weise mittels der Anzeigeeinheit 6 das erste angewiesene Trainingsgerät oder Startgerät zur Anzeige gebracht wird.

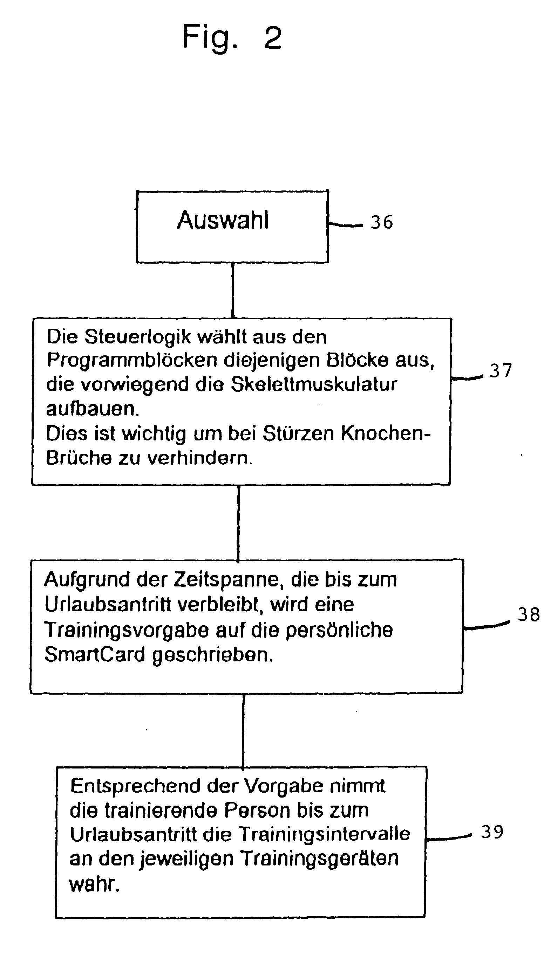

Anhand des in Fig. 2 dargestellten Ablaufdiagramms soll beispielshaft ein Anforderungsprofil für den Wintersport erläutert werden. Gemäß Block 36 wird die Auswahl initiiert, um gemäß Block 37 über die Steurlogik aus den Programmblöcken diejenigen Blöcke auszuwählen, welche vorwiegend für den Aufbau der Skelettmuskulatur vorgesehen sind. Dies ist wichtig, um bei Stürzen etwaige Knochenbrücke zu verhindern. Gemäß Block 38 wird aufgrund der Zeitspanne, welche bis zu einem Urlaubsantritt verbleibt, eine Trainingsvorgabe auf den Datenträger, somit die perönliche SmartCard geschrieben. Schließlich nimmt gemäß Block 39 entsprechend der erläuterten Vorgabe die trainierende Person bis zum Urlaubsantritt die aufgrund der Auswahl ermittelten Trainingsintervalle an den jeweiligen Trainingsgeräten war.

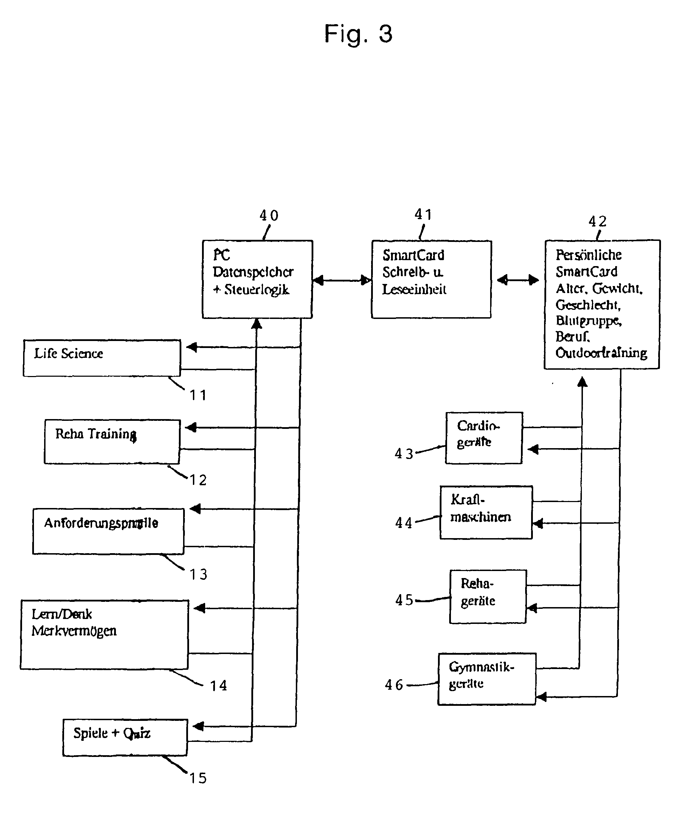

Fig. 3 zeigt ein Blockschaltbild der Anordnung bzw. des Verfahrensablaufs derselben mit den Modulen 11 bis 15. Der Block 40 entspricht dem oben erläuterten Rechner mit der speichereinheit bzw. dem Datenspeicher sowie der Steuerlogik 35. Der Block 41 entspricht dem Datenträger sowie der Schreib- und Leseeinheit. Gemäß Block 42 enthält der Datenträger, welcher bevorzugt als eine persönliche SmartCard ausgebildet ist, personenbezogene Daten des jeweiligen Trainierenden, insbesondere dessen Alter, Gewicht, Geschlecht, Blutgruppe und Beruf, und bevorzugt Daten des gewünschten Trainingsprofils, wie beispielsweise eines Outdoor-Trainings. Schließlich entsprechen die Blöcke 43 bis 46 den vorhandenen bzw. auswählbaren Trainingsgeräten, wie Cardiogeräte, Kraftmaschinen, Rehageräte und Gymnastikgeräte. Das Verfahren läuft in folgenden Schritten ab:
A. Die persönliche SmartCard oder der Datenträger wird in die Leseeinheit eingesteckt.
B. Auf dem Bildschirm erscheinen 5 Module.
C. Ein Modul wird ausgewählt.
D. Die Funktion des Moduls wird auf die SmartCard geschrieben.
E. Der Trainierende steckt die SmartCard in das erst angezeigte Gerät.
F. Die SmartCard steuert das jeweilige Cardiogerät, gibt Bedienung und Reihenfolge vor.
G. Das jeweilige absolvierte Training wird als "absolviert" gespeichert.

Nach Auswahl des Moduls werden unter Berücksichtigung und/oder in Abhängigkeit der mittels des Datenträgers bzw. der persönlichen SmartCard eingegebenen personenbezogenen Daten über die ausgewählten Daten des betreffenden Moduls die Daten des oder der Programmblöcke ausgewählt und/oder kombiniert, wobei ferner die Daten der Steuerfunktionen der für den derart ermittelten Trainingsablauf vorgesehenen Trainingsgeräte bereitgestellt werden, um auf den Datenträger geschrieben zu werden. Hierbei erfolgt in Abhängigkeit der Daten des ausgewählten Moduls sowie der personenbezogenen Daten eine Kombination mit den Daten der Programmblöcke zwecks Vorgabe des jeweiligen Trainingsgeräts sowie dessen Art und Weise der Benutzung sowie die Abfolge der zu benutzenden Trainingsgeräte und im Ergebnis die Erstellung eines Trainingsplans. Die derart kombinierten Daten werden über die Steuereinheit auf den Datenträger übertragen, welcher seinen derart mit den Daten eingespeisten persönlichen Datenträger dann lediglich noch in die Lese- und Schreibeinheit des jeweiligen Trainingsgerätes einführen muß, welchem somit die für das Training zu beachtenden Daten, insbesondere Steuerfunktionen, übermittelt sind.

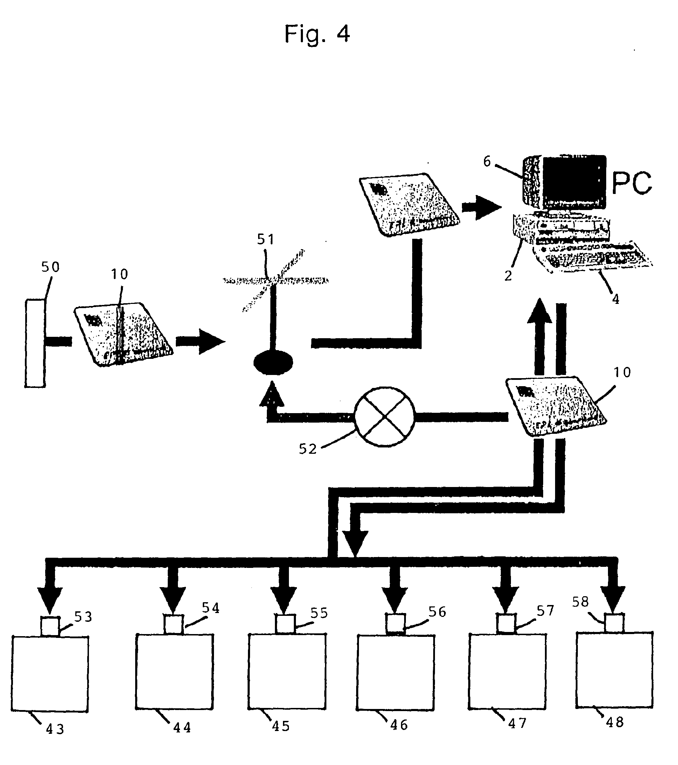

Fig. 4 zeigt eine Prinzipdarstellung der erfindungsgemäßen Anordnung. Durch den Block 50 ist der Eingang eines Fitness-Studios oder dergleichen angedeutet, durch welchen ein die persönliche SmartCard 10 besitzender Trainierender eintritt und zu einem Drehkreuz 51 am Check-In & Check-Out gelangt. Der Trainierende führt dann seine SmartCard 10 in die Lese- und Schreibeinheit des Rechners 2, mit welchem in bekannter Weise die Tastatur bzw. Eingabeeinheit 4 sowie der Monitor bzw. die Anzeigeeinheit 6 verbunden ist. Wird gemäß des ⊗-Symbols 52 am Trainingsende nicht am PC bzw. Rechner 2 ausgelesen, sondern direkt ausgecheckt, so werden beim nächsten Training, vor der Auswahl des Moduls, die zuletzt absolvierten Trainingsabläufe gespeichert. Die Anordnung enthält eine vorgegebene Anzahl von Trainingsgeräten 43 bis 48 mit zugeordneten Lese- und Schreibeinheiten 53 bis 58. Mittels des Datenträgers bzw. der persönlichen SmartCard 10 erfolgt in bevorzugter Weise die Datenübermittlung zwischen dem Rechner 2 und den Trainingsgeräten 43 bis 48, welche geeignete, hier nicht dargestellte Anzeigeeinheiten, wie LCD-Displays, TFT-Bildschirme oder dergleichen, aufweisen.

### Beispiele aus dem Modul Lern-, Denk-, Merkvermögen:

### 1. IQ-Training:

Nachdem der Trainierende startet, erscheint im Display des jeweiligen Gerätes ein blinkender Punkt (können auch Symbole oder Bilder, wie z. B. Fahrrad sein), das den Startpunkt definiert.

Über die Tastatur (Pfeiltasten) kann die Richtung links/rechts/oben oder unten ständig vorgegeben werden.

In Abhängigkeit der Pedaldrehzahl und des Drehmoments beginnt der Punkt Richtung am oberen Displayrand zu laufen.

In Abhängigkeit von Alter, Gewicht, Geschlecht und Trainingszustand (wird vor dem Start eingegeben oder -wenn SmartCard verwendet- von dort übernommen) ergibt sich eine Grundbelastung, die über die Pedaldrehzahl verändert werden kann.

Gestartet wird immer mit 60 UPM, die vom Trainierenden zwischen 25-160 UPM verändert werden kann.

Die ersten 2 Minuten nach Start werden zur Muskelerwärmung und zur Erhöhung der Pulsfrequenz genutzt.

Durch die erhöhte Pulsfrequenz wird vermehrt Sauerstoff dem Blut zugeführt, das ein verbessertes Denkvermögen zur Folge hat.

Am Ende der 2 Minuten erscheint am oberen Displayrand eine Frage mit 3 möglichen Antworten. (Das Fragegebiet wird vor Start an dem Menü ausgewählt.)

Über die Pfeiltasten muss man sich für eine Antwort entscheiden.

Die Entscheidung über die jeweilige Pfeiltaste wird mit der Starttaste betätigt. Nach Betätigung der Starttaste läuft der Punkt entsprechend der Pedaldrehzahl auf die ausgewählte Antwort zu.

Hat man eine falsche Antwort angewählt, so wird nach 25 % der zurückgelegten Strecke die Leistung verdoppelt, und man hat nochmals die Gelegenheit, eine andere Antwort auszuwählen, allerdings muss die Wegstrecke mit einer höheren Leistung gefahren werden.

Die Höhe der "Strafleistung" kann vor Start des Programms per Menü ausgewählt werden.

Stellt der Trainierende selbst fest, dass er eine falsche Antwort gewählt hat, so kann über die Stopptaste und die Pfeiltasten eine andere Antwort ausgewählt werden.

Erreicht der blinkende Punkt die ausgewählte Antwort, so wird bei richtiger Antwort die Pedalleistung abgeschaltet.

Der blinkende Punkt springt zurück zum Anfang und die nächste Frage mit 3 Antworten erscheint.

Bei falscher Antwort wird für 10 Sekunden eine hohe Leistung vorgegeben.

Das IQ-Training dauert im Standard 20 Minuten und ist in 8 Intervalle unterteilt, also 8 Fragen/Antwort-Blöcke.

Andere Trainingszeiten Frage/Antwort-Blöcke können per Menü ausgewählt werden. Jeder Block wird mit Punkten bewertet.

Je nach Schwierigkeitsgrad der Fragen werden bis zu 5 Punkte pro Frage gegeben, die auf direktem Weg richtig beantwortet wurden.

Wird ein Fehler vom Computer festgestellt (nach 25 % der zurückgelegten Strecke wird die Leistung verdoppelt), dass die falsche Antwort gegeben wurde, so werden 2 Punkte abgezogen.

Stellt der Trainierende selbst den Fehler fest und korrigiert, so wird 1 Punkt abgezogen.

Wurde die Frage falsch beantwortet, gibt es 0 Punkte.

Ist das ausgewählte IQ-Training beendet, wird die gesamte Punktzahl ermittelt und bewertet.

Für den Trainierenden erscheint im Display die entsprechende IQ-Zahl, die der bekannten IQ-Tabelle zugrunde gelegt ist.

### 2. Gedächtnistraining:

Per Menü können Bereiche ausgewählt werden, aus denen bis zu 10 Begriffe auf der linken Bildschirmseite erscheinen.

Der Trainierende muß sich die Reihenfolge merken.

Nach 10 Sekunden verschwinden die Begriffe wieder und erscheinen nach 30 Sekunden auf der rechten Seite in anderer Reihenfolge.

Der Trainierende muss nur per Pfeiltasten und Pedaldrehzahl den blinkenden Punkt zu den Begriffen dirigieren und mittels Starttaste bestätigen, um diese dann zur linken Seite an die richtige Stelle zu führen.

Dort sind Zahlen von 1 bis 10, die den entsprechenden Platz angeben.

Zur Bewertung wird die Zeit und die Richtigkeit genutzt.

Die Zeit gibt den Fitnessfaktor, die Richtigkeit das Gedächtnisvermögen an.

Anhand einer Tabelle, die von sehr gut bis mangelhaft reicht, kann sich der Trainierende seinen Wert jeweils am Ende des Trainings anschauen.

Die Trainingsdauer beträgt im Standard 20 Minuten.

### 3. Labyrinthtraining:

Auf dem Display erscheint ein Labyrinth (per Menü können verschiedene Darstellungen ausgewählt werden.)

Am Standpunkt der "blinkende Punkt".

Per Pfeiltasten und Drehzahl kann man Richtung und Geschwindigkeit des "blinkenden Punktes" steuern.

Werden falsche Richtungen gewählt, so wird die Leistung in sehr kleinen Einheiten gesteigert, so dass der Trainierende sehr genau auf den Pedalwiderstand achten muss, um so früh wie möglich die falsche Richtung zu erkennnen, da die Zeit, die benötigt wird, um das Labyrinth zu durchfahren, bewertet wird.

Um den Trainierenden vor Überlastung zu schützen, wird bei Überschreitung der persönlichen Pulsfrequenz die Leistung abgeschaltet, der "blinkende Punkt" hört auf zu blinken und bleibt stehen, bis die Pulsfrequenz wieder im Normalbereich ist.

Diese Pulsüberwachungsfunktion ist in allen Programmen aktiv.

### Bezugszeichen

- 2: Rechner
- 4: Eingabeeinheit
- 6: Anzeigeeinheit
- 8: Lese- und Schreibeinheit
- 10: Pfeil / Datenträger / SmartCard
- 11 bis 15: Modul
- 21 bis 34: Programmblock
- 35: Steuerlogik / Steuereinheit
- 36 bis 42: Block
- 43 bis 48: Trainingsgerät
- 50: Block / Eingang
- 51: Drehkreuz / Check-In & Check-Out
- 52: ⊗-Symbol
- 53 bis 58: Lese- und Schreibeinheit

## Patentansprüche

1. Anordnung für das Fitnesstraining, enthaltend einen Rechner (2) sowie wenigstens ein Trainingsgerät (43 bis 48),
**dadurch gekennzeichnet, dass** der Rechner (2) eine Steuerlogik (35), Programmblöcke (21 bis 34) und Module (11 bis 15) enthält,
dass ein Datenträger (10) vorgesehen ist, auf welchem personenbezogene Daten sowie Daten gemäß ausgewählter Module (11 bis 15) und Programmblöcke (21 bis 34) speicherbar sind,
und dass das wenigstens eine Trainingsgerät (43 bis 48) derart ausgebildet ist, dass eine Steuerung mittels des Datenträgers (10) durchführbar ist.

2. Anordnung nach Anspruch 1, **dadurch gekennzeichnet, dass** das mittels der Steuerlogik (35) je nach Auswahl des oder der Module (11 bis 15) ein oder mehrere Programmblöcke (21 bis 24) abrufbar und kombinierbar sind zur Realisierung entsprechender Steuerfunktionen der Module (11 bis 15).

3. Anordnung nach Anspruch 1 oder 2, **dadurch gekennzeichnet, dass** mit dem Rechner (2) eine Anzeigeeinheit (6), insbesondere für die im Rechner (2) enthaltenen Module (11) verbunden ist und/oder dass nach Auswahl eines Moduls Daten desselben auf dem Datenträger speicherbar sind, und/oder dass der Rechner (2) eine Schreib- und Leseeinheit (8) für den Datenträger (10) enthält.

4. Anordnung nach einem der Ansprüche 1 bis 3, **dadurch gekennzeichnet, dass** das wenigstens eine Trainingsgerät, bevorzugt alle Trainingsgeräte (43 bis 48),eine Schreibund Leseeinheit (53 bis 58) für den Datenträger (10) enthalten.

5. Anordnung, insbesondere nach einem der Ansprüche 1 bis 4, **dadurch gekennzeichnet, dass** die Steuerlogik (35) zur Auswahl derjenigen Blöcke aus den Programmblöcken (21 bis 34) ausgebildet ist, welche einem Anforderungsprofil des ausgewählten Moduls (11 bis 15) entsprechen.

6. Anordnung nach einem der Ansprüche 1 bis 5, **dadurch gekennzeichnet, dass** der Datenträger (10) zum Speichern der dem ausgewählten Modul entsprechenden Daten und/oder als SmartCard ausgebildet ist, welche Daten auf der Anzeigeeinheit (6) anzeigbar sind, wobei insbesondere aus einer Anzahl der Trainingsgeräte (43 bis 48) das oder die zu absolvierenden Trainingsgeräte anzeigbar sind.

7. Anordnung nach einem der Ansprüche 1 bis 6, **dadurch gekennzeichnet, dass** das oder die Trainingsgeräte (43 bis 48) jeweils eine Anzeigeeinheit (53 bis 58) enthalten, mittels welcher Trainingsdaten und/oder die auf dem Datenträger (10) gespeicherten Daten und/oder das nächste zu benutzende Trainingsgerät anzeigbar sind.

8. Verfahren zur Steuerung und/oder Überwachung einer Anordnung für das Fitnesstraining, enthaltend einen Rechner (2) sowie ein Trainingsgerät (43 bis 48), **dadurch gekennzeichnet, dass** aus einer Anzahl von Modulen (11 bis 15) mit vorgegebenen Daten ein Modul ausgewählt wird, dass Daten des ausgewählten Moduls (11 bis 15) mit in Programmblöcken (21 bis 34) enthaltenen Daten kombiniert werden, dass die derart erhaltenen Daten auf einem Datenträger (10) gespeichert werden und dass mittels des Datenträgers (10) die letztgenannten Daten wenigstens einem der Trainingsgeräte (43 bis 48) zugeführt werden.

9. Verfahren nach Anspruch 8, **dadurch gekennzeichnet, dass** nach Auswahl eines der genannten Module (11 bis 15) unter Berücksichtigung von auf dem Datenträger (10) gespeicherten personenbezogenen Daten die Kombination mit den Daten des oder der Programmblöcke (21 bis 34) durchgeführt wird.

10. Verfahren nach Anspruch 8 oder 9, **dadurch gekennzeichnet, dass** es zur Steuerung und/oder Überwachung der Anordnung nach einem der Ansprüche 1 bis 7 verwendet wird.
